# EUROPEAN PATENT APPLICATION

(11) **EP 0 683 137 A2**
(43) Date of publication of application: **22.11.1995**
(21) Application number: 95303280.2
(22) Date of filing: 17.05.1995
(51) Int. Cl.: C02F 1/74, C02F 1/28

(54) **Treatment of effluent seawater produced by flue gas desulphurization**

(30) Priority: 19.05.1994 US 246024
(71) Applicant: THE BABCOCK & WILCOX COMPANY, New Orleans, Louisiana 70160-0035 (US)
(72) Inventor: Downs, William, Alliance, Ohio 44601 (US)
(74) Representative: Pilch, Adam John Michael

(57) **Abstract**

A method of treating effluent seawater used in a process for desulphurizing flue gas includes aerating the effluent seawater in an aeration pond (10). The aerated effluent seawater is then channelled through a bed (40) of crushed limestone to raise the pH of the seawater to at least 7.8. The treated seawater is then channelled back to the fresh seawater source, such as an ocean (30), without causing any harm to the environment. Fresh limestone is periodically added to the bed (40) and the size of the bed depends on the amount of effluent seawater to be treated.

## Description

The present invention relates, in general, to the desulphurization of flue gas and, in particular, to treatment of effluent seawater produced by flue gas desulphurization.

It is well known that seawater can be used to scrub sulphur dioxide (SO₂) amounts from boiler flue gases. This is known as "seawater scrubbing". The active constituent in the seawater is bicarbonate. Seawater has a natural pH of about 8.2. During the scrubbing process the following reactions take place: $\text{SO₂ + HCO₃⁻ → HSO₃⁻ + CO₂}$${\text{2HSO₃⁻ + O₂ → 2SO₄}}^{\text{=}} \text{+ 2H⁺}$

The major constituents in fresh seawater include:
19,000 ppm chloride ion
10,600 ppm sodium ion
1,300 ppm magnesium ion
890 ppm sulphate ion
400 ppm calcium ion
380 ppm potassium ion
170 ppm bicarbonate ion.

In addition, the seawater tends to be saturated with aerated oxygen at about 5 ppm.

When seawater leaves the scrubber, the chemical composition has been altered by the scrubbing process. A portion of the bicarbonate is depleted by the reaction (1). The sulphate concentration is slightly elevated over its background concentration, and essentially all of the dissolved oxygen is consumed by the reaction (2) above. The portion of the bisulphite that is not oxidized by the reaction (2) remains in the seawater as a chemical oxygen demand (COD) constituent. Finally, the pH of the seawater leaving the scrubber can be as low as 3.5. Because of these changes, the seawater cannot be returned to the ocean without first treating the water to an extent where the water will not adversely effect aquatic life.

Presently, there is no known method or system for treating effluent seawater from a seawater scrubber system which provides an efficient treatment of the seawater prior to returning the seawater to its natural source.

The present invention provides a method of treating effluent seawater produced by a flue gas desulphurization process utilizing seawater, the method comprising:
aerating the effluent seawater; and
channelling the aerated effluent seawater through a limestone bed.

In a preferred embodiment of the invention, the effluent seawater is aerated in an aeration pond. The aerated effluent seawater is then channelled through a bed of crushed limestone in order to raise the pH of the seawater to at least 7.8. The seawater is then channelled back to a fresh seawater source, such as the ocean, without causing any harmful side effects to the environment or aquatic life.

Fresh limestone is periodically added to the bed; the size of the bed, which includes the height, width and length of the bed, is varied depending on the effluent seawater to be treated.

The preferred embodiment of the present invention provides a method of treating effluent seawater which utilizes lesser amounts of fresh seawater than used by the known treatment systems and methods.

The invention will now be described by way of example with reference to the accompanying drawings, throughout which like parts are referred to by like references, and in which:
Figure 1 is a schematic view illustrating a known method of treating effluent seawater;
Figure 2 is a schematic view illustrating a method of treating effluent seawater according to an embodiment of the present invention; and
Figure 3 is a schematic view illustrating a limestone bed of Figure 2.

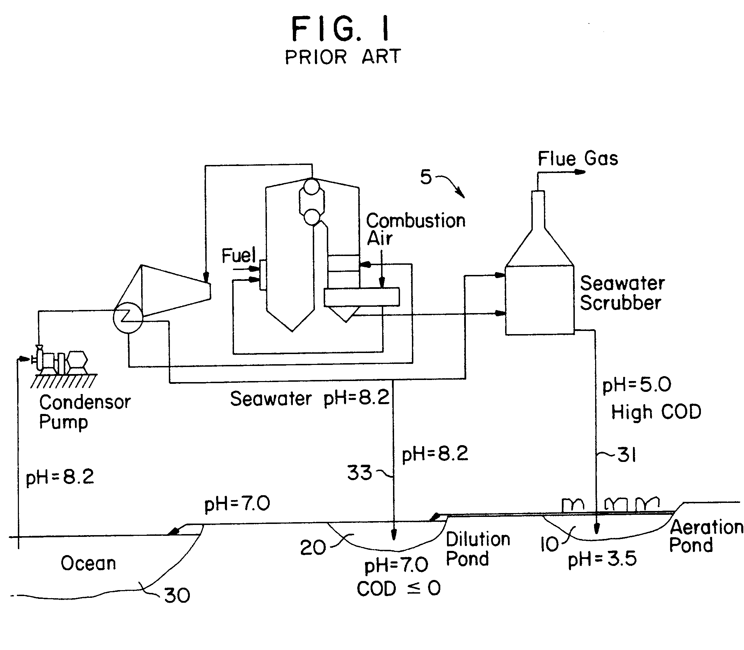

A known method of treating spent seawater 31 from an SO₂ scrubber system 5 utilizes fresh seawater 33 derived from a seawater source 30 such as the ocean and is a two-step process illustrated schematically in Figure 1. The first step is to send the spent seawater 31 to an aeration pond 10. In the pond 10, the water 31 is aerated to complete the reaction (2), mentioned above, and to resaturate the water with oxygen. As this proceeds, the pH will continue to drop, sometimes to as low as about 3.5.

The second step of the known seawater scrubber effluent treatment process is to pass the aerated seawater to a second pond or dilution pond 20 where the treated seawater is mixed with fresh seawater 33. The purpose is to raise the pH of the mixture to an acceptable compromise pH. Typically, the pH must be raised to at least 7.0. Some locations require that the seawater effluent pH be raised to at least 7.8. The higher the pH, the greater the quantity of fresh seawater required for dilution and mixing.

Although the process of mixing these two seawater streams 31 and 33 is simple, the pumping costs can be excessive. An 800 MWe boiler burning 2% sulphur fuel and utilizing a seawater scrubber can easily produce about 47 m³/s (750,000 gallons per minute) of seawater effluent which must be mixed with about 3,800 m³ (1,000,000 gallons) of fresh seawater. These are extremely large quantities of seawater which must be accounted for. In fact, the amount of waste water treatment is about three orders of magnitude greater than the waste water produced by limestone flue gas desulphurization (FGD) systems. Thus, for the energy required to pump these quantities of water, it takes about 1.7 MW to lift 47 m³/s (750,000 gpm) of seawater through an elevation change of only 3.0 m (10 feet).

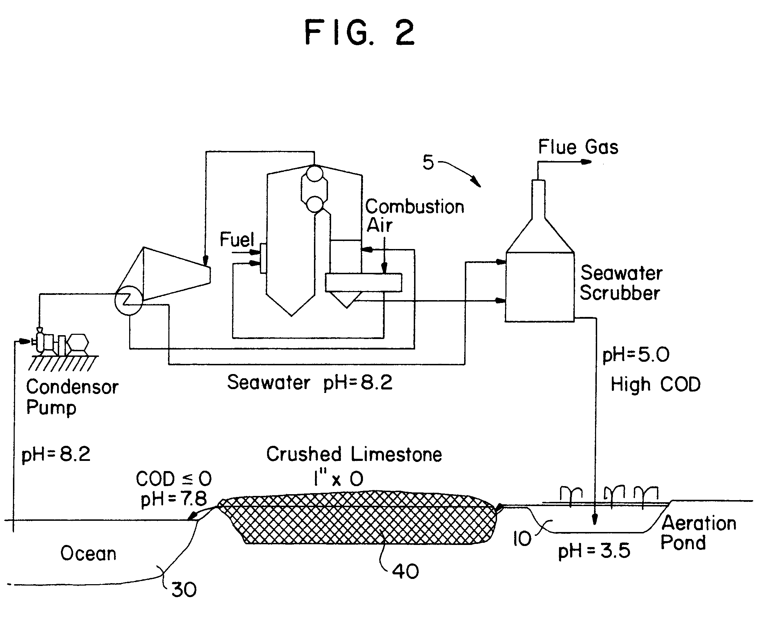

An embodiment of the present invention is schematically illustrated in Figure 2. The same reference numerals as in Figure 1 are used to designate the same or similar features of Figure 2. The embodiment of the present invention replaces the mixing pond 20 (Figure 1) with a percolating channel or particle bed 40 filled with limestone gravel. Similarly to the known method described above, the effluent seawater 31 is channelled to the aeration pond 10 for aeration. After aeration, the pH of the seawater 31 should be approximately 3.5, and this is channelled to the limestone particle bed 40. As the aerated, acidic seawater passes through the granular limestone particle bed 40, the following reaction neutralizes the acidity and replenishes the bicarbonate: $\text{CaCO₃(s) + H⁺ → HCO₃⁻ + Ca⁺⁺}$

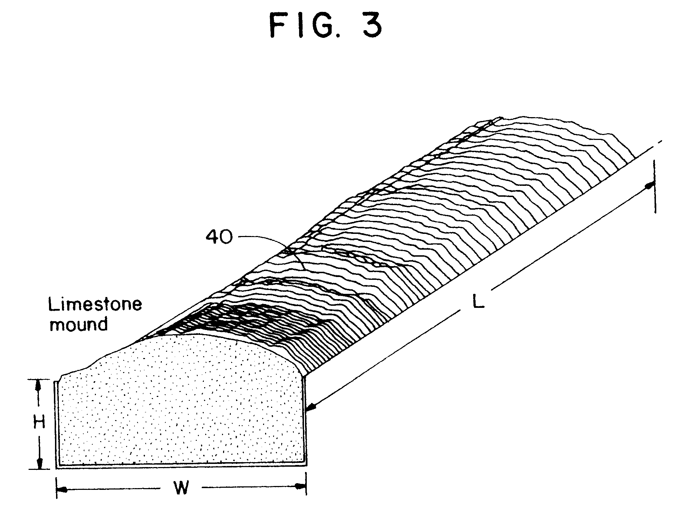

For an 800 MWe boiler burning 2% sulphur coal, and having an effluent rate of about 47 m³/s (750,000 gpm), the channel or bed 40 can be sized to have a depth or height H of 3.0 m (10 feet), a width W of 9.0 m (30 feet), and a length L of 300 m (1,000 feet) as shown in Figure 3. The height H, width W and length L of the channel 40 can be of other dimensions in order to suit the size of the effluent seawater treatment operation. The channel 40 is filled with 25 mm x 0 (1" x 0) limestone granules so that it is overflowing, as illustrated in Figure 3. As long as the limestone channel or bed 40 is large enough, the pH of the seawater 31 channelled through the bed 40 will be raised to at least 7.8.

For the above-mentioned example, it would be necessary to "top off" the mound of limestone approximately every 10 days to two weeks. Top-off periods will vary depending on the size of the channel 40 and the extent of treatment needed. The concentrations of reactants and reaction products in this system are such that no precipitation will take place in the channel 40. Therefore, pluggage of the granular material in the channel 40 is not a problem.

After channelling the seawater 31 through the channel or bed 40, the seawater is channelled back to the natural seawater source 30.

For low sulphur seawater scrubbing applications, the channel size can be reduced in proportion to the sulphur concentration, or the time periods between the topping-off periods can be extended proportionately.

The present system has several advantages which are listed below.

The present system reduces seawater pumping costs significantly. In the 800 MW seawater power plant scrubber example, the pumping power can be reduced by as much as 10 MWe.

Also, the present technique actually replenishes the alkalinity of the seawater. The previously-known practice of adjusting the pH by mixing the effluent with fresh seawater does not. In fact, the known method depletes bicarbonate from the seawater.

Moreover, if the limestone gravel channel 40 is sufficiently large, equilibrium is established between the seawater and the limestone, and the pH is ≧ 7.8. This brings the seawater much closer to the natural pH of seawater. The known method cannot achieve such a pH range change without resorting to nearly infinite dilution.

Additionally, the known methods of pH control fit the axiom "the solution to pollution is dilution". By contrast, the present technique is a proactive approach.

While a specific embodiment of the invention has been shown and described in detail to illustrate the application of the principles of the invention, it will be understood that the invention may be embodied otherwise without departing from such principles.

## Claims

1. A method of treating effluent seawater produced by a flue gas desulphurization process utilizing seawater, the method comprising:
aerating (10) the effluent seawater; and
channelling the aerated effluent seawater through a limestone bed (40).

2. A method according to claim 1, including channelling the effluent seawater from the limestone bed (40) to a fresh seawater source (30).

3. A method according to claim 2, including raising the pH of the effluent seawater to at least 7.8 prior to channelling to the fresh seawater source (30).

4. A method according to claim 1, claim 2 or claim 3, wherein the limestone bed (40) has a height (H), a width (W) and a length (L).

5. A method according to claim 4, including setting the height (H), the width (W) and the length (L) of the limestone bed (40) depending on the amount of effluent seawater.

6. A method according to any one of the preceding claims, including periodically adding an amount of fresh limestone to the limestone bed (40).

7. A method according to claim 6, wherein the fresh limestone is in a granular form.

8. A method according to claim 6 or claim 7, including varying the time period for adding an amount of fresh limestone depending on the amount of effluent seawater.

9. A method according to any one of the preceding claims, including raising the pH of the effluent seawater to at least 7.8.
